# EUROPEAN PATENT APPLICATION

(11) **EP 4 667 823 A1**
(43) Date of publication of application: **24.12.2025**
(21) Application number: 24020210.1
(22) Date of filing: 20.06.2024
(51) Int. Cl.: F23D 11/38, F23D 14/78, F23R 3/28, F23D 14/48

(54) **A METHOD FOR MANUFACTURING A BURNER TIP FOR A BURNER**

(71) Applicant: Linde GmbH, 82049 Pullach (DE); Selas-Linde GmbH, 82049 Pullach (DE)
(72) Inventor: Aumann, Martin, 82049 Pullach (DE); Murer, Martin, 82049 Pullach (DE); Schatz, Kati, 82049 Pullach (DE); Stalder, Martin, 82049 Pullach (DE); Ulmer, Sebastian, 82049 Pullach (DE)
(74) Representative: Lu, Jing

(57) **Abstract**

The present invention relates to a method for manufacturing a burner tip (400) for a burner, comprising the steps of manufacturing a front-end part (410) of the burner tip (400) of a first material; and manufacturing a back-end part (420) adjacent to the front-end part (410) of a second material, wherein at least a part of the back-end part (420) is manufactured by means of additive manufacturing.

## Description

The present invention relates to a method for manufacturing a burner tip for a burner as well as to a correspondingly manufactured burner tip and to a burner with a correspondingly manufactured burner tip.

### Background of the invention

Burners or feed injectors can for example be used for a partial oxidation process of a fuel comprising hydrocarbons, e.g. natural gas, residual oil, coal etc., using an oxidant or an oxygen-comprising fluid, e.g. air, pure oxygen or a mixture thereof. A corresponding burner can comprise one or several annular channels for supplying one or several fluids of that kind. In order to cool the burner during the combustion process, the burner can comprise a cooling jacket, wherein a cavity can be provided inside a wall of the burner as a channel or cooling channel for flowing or conducting a cooling fluid, e.g. water, through the corresponding burner wall.

Burners of that kind can be exposed to high temperatures, high pressure, and a corrosive atmosphere, in particular to a metal dusting atmosphere, wherein metal dusting is a complex form of high-temperature corrosion. A tip of the burner is exposed to particularly high loads of that kind. Elevated operating pressure as well as stress induced by thermal expansion can lead to a high wall thickness of the cooling channels at the burner tip. For example, due to high heat flux from the syngas to the cooling fluid at the burner tip, the surface temperature of the burner tip can be in the range between of 550°C to 700°C. It is desirable to provide an improved burner tip, which can better withstand these kinds of loads.

### Disclosure of the invention

The present invention relates to a method for manufacturing a burner tip for a burner as well as to a burner tip and to a burner with the features of the independent claims. Embodiments and advantages form the subject-matter of the dependent claims and of the subsequent description.

A front-end part or front-end section or front-end element of the burner tip is manufactured of a first material. A back-end part, back-end section, or back-end element of the burner tip adjacent to the front-end part is manufactured of a second material, wherein the second material is different from the first material. At least a part of the back-end part is manufactured by means of an additive manufacturing process.

The nomenclature of the front-end and back-end of the burner tip is particularly to be understood in relation to a fluid direction of fluids provided to the assembled burner, wherein the fluids are directed towards the front-end of the burner tip. Expediently, the fluids can be ejected from the burner at the front-end part of the burner tip and a flame can be created at the front-end part of the burner tip. The back-end of the burner tip can e.g. be connected to other elements of the burner. The front-end part particularly forms the very top, the very front part, or the very front tip of the burner tip. The front-end part is especially an annular element or ring element. The back-end part particularly comprises a conical section adjacent to the front-end part and an annular section adjacent to the conical section. The back-end part can particularly form the largest part of the burner tip. For example, the front-end part can form less than 25% of the burner tip volume, or less than 20%, or less than 15%, or less than 10%. The front-end part can expediently be manufactured as a base or base element of the burner tip. The back-end part can particularly be manufactured directly on top of or of directly adjacent to this base element. Particularly, the back-end part and the front-end part can be manufactured as a one-piece element. However, it is also possible to manufacture the front-end part and the back-end part as separate elements and connect these elements with each other.

The present invention particularly allows to manufacture different parts of the burner tip from different materials expediently by means of different manufacturing processes. Manufacturing these different parts from different, individual materials expediently allows to easily and flexibly manufacture these parts with different, individual characteristics. In particular, the different materials for the different burner tip parts can be individually chosen depending on the specific loads acting on the corresponding burner tip positions during burner operation. Expediently, the front-end part of the burner tip, i.e. the part of the tip at which the burner flame is created, can be manufactured from a specific material which can more easily withstand the high thermal loads and the corrosive, metal dusting atmosphere. The first material can thus e.g. be material with high corrosion resistance. The material of the back-end part can expediently be chosen such that it can effectively dissipate the heat. Due to less heat exposure at the back-end part, the material temperature of the back-end part can be significantly lower than the material temperature of the front-end part, so that a high corrosion resistance can particularly only be required for the material of the front-end part but not for the back-end part. The invention therefore allows to manufacture an improved burner tip, which can better withstand the high loads during burner operation. Furthermore, the invention allows to use expensive materials only at burner tip positions, where it is specifically needed. For example, expensive corrosion-resistant material can only be used for the front-end part, whereas less expensive material can be used for the back-end part. Expediently, a cheaper material can be used for the back-end part. The invention therefore allows to save costs for manufacturing the burner tip.

Furthermore, the invention expediently provides a hybrid manufacturing method, wherein at least a part of the burner tip is manufactured by means of additive manufacturing. Additive manufacturing expediently allows to easily and flexibly create the corresponding part with specific structures. Particularly, at least a corresponding part of the back-end part is created by means of additive manufacturing, which is provided for forming a cooling channel for flowing a cooling fluid through the burner tip. If the front-end part shall also comprise structures for forming the cooling channel, at least these structures of the front-end part can expediently be manufactured by means of additive manufacturing as well. The additive manufacturing particularly allows to easily and flexibly create complex structures for forming the cooling channels, in particular such that an optimum flow of cooling liquid and therefore an optimum cooling and an optimum heat dissipation can be achieved during burner operation. The invention therefore allows to manufacture an improved burner tip with high or highest cooling efficiency, which can withstand high thermal loads during burner operation. Therefore, high temperature corrosion mechanisms become less severe, resulting in increased lifetime of the front-end part.

The invention particularly allows to combine additive manufacturing with traditional, conventional non-additive manufacturing. This hybrid combination of additive manufacturing and non-additive manufacturing expediently allows to flexibly manufacture the burner tip with low effort in a cost saving manner. Particularly, at least the corresponding part of the back-end part is manufactured by means of additive manufacturing, wherein the remaining part of the back-end part can be manufactured by means of non-additive manufacturing. However, also the entire back-end part can be manufactured by means of additive manufacturing. The front-end part can for example be manufactured entirely by means of additive manufacturing or entirely by means of non-additive manufacturing. It is for example also possible that at least a part of the front-end part is manufactured by means of additive manufacturing process. The same type of additive manufacturing or the same type of non-additive manufacturing can be used for creating the front-end part and the back-end part. However, it is also possible to use different types of additive manufacturing or different types of non-additive manufacturing for the front-end part and the back-end part.

Additive manufacturing, often also referred to as "3D printing", is a manufacturing process in which a three-dimensional object is created layer by layer by consecutively adding a material. In this process, a new layer of material is successively applied to the previously created object, solidified and firmly bonded to the underlying layers, e.g. with the aid of a laser, electron beam or electric arc. After one layer has been created, the next layer can be created in an analogous manner.

The additive manufacturing can for example comprise an arc direct energy deposition (arc-DED), also referred to as wire and arc additive manufacturing (WAAM). In the course of this arc-DED or WAAM process, the individual layers of the burner can be created using a consumable wire and an arc. For this purpose, welding torches, for example for gas shielded metal arc welding, e.g. for metal inert gas welding (MIG), metal active gas welding (MAG), or plasma welding, can be used, with an arc burning between the welding torch and the workpiece to be manufactured. The material is continuously fed in the form of a wire or strip and melted by the arc. During this process, molten droplets are formed which are transferred to the workpiece to be produced and firmly bonded to it. The material can be fed to the welding torch, for example, as a consumable wire electrode, with the arc burning between this wire electrode and the workpiece. It is also conceivable to supply the material in the form of an additional wire which is melted by the arc of the welding torch.

It is also possible to use alternative or additional additive manufacturing processes, e.g. wherein the individual layers of the burner can be created by applying the respective material for example in powder form or in the form of wires or strips, and subjecting it to a laser and/or electron beam. The material can be subjected in this way to a sintering or melting process, for example, in order to be solidified. After one layer has been created, the next layer can be created in an analogous manner. Such additive manufacturing processes can for example include selective laser sintering (SLS), selective laser melting (SLM, also referred to as powder bed fusion PBF), electron beam melting (EBM), stereolithography (SL) or fused filament fabrication (FFF).

In contrast to that, non-additive manufacturing is expediently to be understood as a traditional or conventional manufacturing process different from additive manufacturing, wherein a three-dimensional object is particularly not created layer by layer by consecutively adding, solidifying, and bonding a material. For example, non-additive manufacturing can comprise a subtractive manufacturing process, wherein material is removed from a solid block of material in order to create a three-dimensional object, e.g. by means of turning, drilling, boring, milling, reaming etc. Non-additive manufacturing can for example also comprise a moulding or casting process, wherein a molten, liquid material is brought into a specific form e.g. by means of a die or mould, and then cooled in order to create a three-dimensional object.

According to an embodiment, the step of manufacturing the back-end part comprises manufacturing a wall of the back-end part comprising at least one cooling channel for flowing a cooling fluid through the wall. The wall of the back-end part may be defined as comprising an outer and/or central and/or inner circumferential region of the back-end part. Said cooling channel(s) are expediently provided as recesses, cavities or structures in the burner tip wall, which can be connected with a fluid supply. In particular, at least parts, elements, or structures of the back-end part used for creating these cooling channels are manufactured by means of the additive manufacturing.

According to an embodiment, the entire back-end part is manufactured by means of additive manufacturing. In particular, the front-end part can be manufactured as the base of the burner tip. The back-end part can then directly be manufactured onto this front-end part by means of the additive manufacturing process. The burner tip can thus as especially be manufactured as a one-piece element.

According to an embodiment, the wall of the back-end part is manufactured by means of additive manufacturing with at least one integrated cavity or recess or structure forming the at least one cooling channel. The additive manufacturing process expediently allows to easily and flexibly create the back-end part with complex structures in its wall for creating complex cooling channels. The cavities inside the wall can expediently be provided such that an optimum flow of cooling liquid and therefore an optimum cooling and an optimum heat dissipation can be achieved during burner operation. It is also possible to provide or insert a cooling channel element in the at least one cavity, e.g. a parting sheet, a separating plate or a partition plate. By means of this cooling channel element, the corresponding cavity can expediently be divided into different cooling channels. The cooling channel element can for example be manufactured additively or non-additively.

According to an embodiment, the wall of the back-end part is manufactured by means of non-additive manufacturing such that the wall comprises a cavity. A cooling channel element of the back-end part is manufactured by means of additive manufacturing and inserted in the cavity such that the at least one cooling channel is created. This cooling channel element can e.g. be a sheet or a plate, e.g. a parting sheet, a separating plate or a partition plate. The cooling channel element can e.g. comprise complex structures for creating complex cooling channels. Additive manufacturing expediently allows to easily and flexibly create cooling channel elements of that kind. Therefore, non-additive manufacturing and additive manufacturing can expediently be combined for creating the back-end part.

According to an embodiment, the step of manufacturing the front-end part comprises providing a recess in a surface of the front-end part facing the back-end part. An insertion element is provided inside this recess. This insertion element can expediently have a specific form or structure. By means of this insertion element, a specific structure can expediently be created in the connection surface towards the back-end part.

According to an embodiment, the recess with the insertion element in the front-end part is configured to be brought in fluid communication with the at least one cooling channel in the wall of the back-end part. For example, the recess can form a front end or front ending of the cooling channels. The insertion element in the recess can expediently influence the flow of cooling liquid in the cooling channels. For this purpose, the insertion element can expediently be provided in dependence of and aligned with the cooling channels in the wall of the back-end part.

According to an embodiment, the insertion element is manufactured by means of additive manufacturing. Additive manufacturing expediently allows to easily and flexibly create the insertion element with a specific form and specific structures. Therefore, at least this insertion element of the front-end part is created by means of additive manufacturing. The rest of the front-end part can e.g. be manufactured entirely by means of additive or non-additive manufacturing.

According to an embodiment, the first material has a higher corrosion resistance than the second material. Since the front-end part as the very front of the burner tip is exposed to high temperatures, high pressure, and a corrosive metal dusting atmosphere during burner operation, the first material is expediently chosen with higher corrosion resistance and with higher metal dusting resistance than the second material. Since this kind of corrosion resistant material can be expensive, this material is only used where it is specifically needed during burner operation, thereby reducing costs of the burner tip. The second material can especially be a less expensive material with lower corrosion resistance.

According to an embodiment, the first material comprises one or several of the alloys 699 XA, 602 CA, 690, and alloy 693. Alloy 699 XA (Euronorm designation: 2.4842; Unified Numbering System (UNS) designation: N06699) is a nickel-chromium-aluminium alloy with high metal dusting resistance. Alloy 602 CA (Euronorm designation: 2.4633; UNS designation: N06025) is a high carbon chromium-iron-nickel alloy with high resistance to oxidation at high temperature and with high metal dusting resistance. Alloy 690 (Euronorm designation: 2.4642; UNS designation: N06690) is a high-chromium nickel alloy with high resistance to many corrosive aqueous high-temperature atmospheres and high resistance to metal dusting, oxidation and sulfidation at high temperature. Alloy 693 (UNS designation: N06693) is a high chromium content nickel-based alloy with high resistance to high temperature corrosion and metal dusting.

According to an embodiment, the second material comprises one or several of the alloys 625, 718, and stainless steel 316L. Alloy 625 (Euronorm designation: 2.4856; UNS designation: N06625) is a nickel-chromium alloy with high strength and high corrosion resistance. Alloy 718 (Euronorm designation: 2.4668; UNS designation: N07718) is a high-strength, corrosion-resistant nickel chromium alloy. Stainless steel 316L (Euronorm designation: 1.4404; UNS designation: S31603) is a molybdenum-bearing austenitic stainless steel with high corrosion resistant properties, elevated temperature tensile, creep and stress-rupture strengths. These kinds of alloys are expediently more commonly used for additive manufacturing than the above-mentioned alloys with high metal dusting resistance. Therefore, the additive manufacturing of the back-end part from this kind of second material can expediently be performed with low costs and low effort.

The invention further relates to a burner tip for a burner manufactured according to an embodiment of the method of the present invention. Further, the invention relates to a burner with a burner tip manufactured according to an embodiment of the method of the present invention. Embodiments and advances of the burner tip, the burner, and the method according to the present invention shall arise from the present description in an analogous manner.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows an embodiment of a burner tip according to the present invention in a sectional side view.
- Fig. 2: schematically shows an embodiment of a burner tip according to the present invention in a sectional side view.
- Fig. 3: schematically shows an embodiment of a burner tip according to the present invention in a sectional side view.
- Fig. 4: schematically shows an embodiment of a burner tip according to the present invention in a sectional side view.

### Detailed description of the drawing

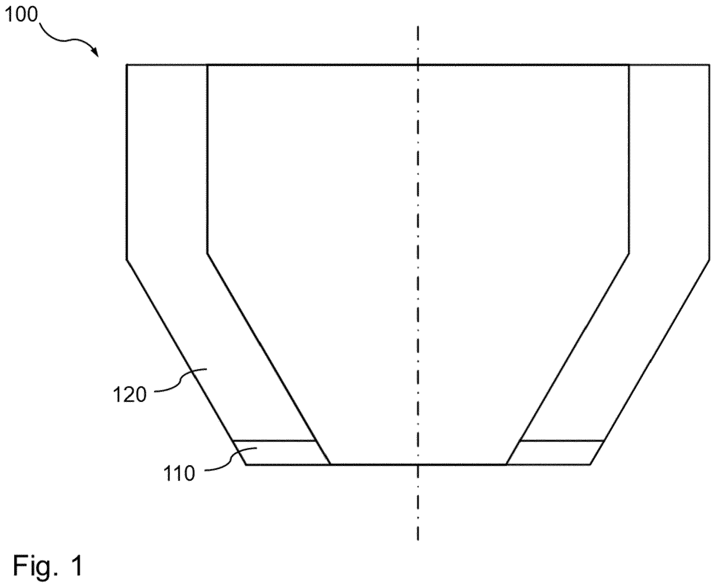

Fig. 1 schematically shows an embodiment of a burner tip 100 according to the present invention a in a sectional side view, wherein the burner tip 100 is manufactured according to an embodiment of the method of the present invention.

The burner tip is provided for a burner, e.g. for a partial oxidation process of a fuel comprising hydrocarbons, e.g. natural gas, residual oil, coal etc., using an oxidant or an oxygen-comprising fluid, e.g. air, pure oxygen, an oxygen-steam-mixture, or a mixture thereof.

The burner tip 100 comprises a front-end part 110, manufactured of a first material, and a back-end part 120 adjacent to the front-end part 110 manufactured of a second material different from the first material.

The entire front-end part 110 can be manufactured by means of non-additive manufacturing, e.g. a moulding or casting process, or by means of additive manufacturing, e.g. selective laser melting (SLM) or powder bed fusion (PBF). The entire back-end part 120 can be manufactured by means of additive manufacturing, e.g. powder bed fusion (PBF), especially directly onto the front-end part 110.

The front-end part 110 particularly forms the very top or very front of the burner tip 100. The front-end part 110 is especially an annular element or ring element. The back-end part 120 particularly comprises a conical section adjacent to the front-end part 110 and an annular section adjacent to the conical section. The back-end part particularly forms the largest part of the burner tip 100. The front-end part 110 particularly forms less than 10% of the volume of the burner tip.

Since the front-end part 110 forms the very top of the burner tip 100, at which the fuel and the oxidant are ejected from the burner and at which the oxidation process is initialised, the front-end part 110 is exposed to particularly high temperatures and a corrosive, metal dusting atmosphere during burner operation.

The first material of the front-end part 110 has therefore a higher corrosion resistance than the second material of the back-end part 120. The first material of the front-end part 110 can particularly be an alloy with high corrosion resistance, e.g. alloy 699 XA, 602 CA, 690 or 693. The second material of the back-end part 120 can be a less expensive alloy to manufacture than the first material with lower corrosion resistance, e.g. alloy 625, alloy 718, or stainless steel 316L. The material prices for alloys 718 or 625 might not vary that much from material prices of e.g. alloy 699 XA. However, these alloys 718 or 625 are particularly materials oftentimes used for additive manufacturing, such that much more suppliers are offering these materials and have more experience, which can expediently yield cheaper production costs of the burner tip 100. Stainless steel 316L expediently is significantly cheaper in material price than alloys 699 XA, 602 CA, 690 or 693, which can be used as the first material.

The invention therefore allows to use the expensive material with high corrosion resistance only at the very top of the burner tip 100, where it is particularly needed. Costs for manufacturing the burner tip 100 can therefore be saved.

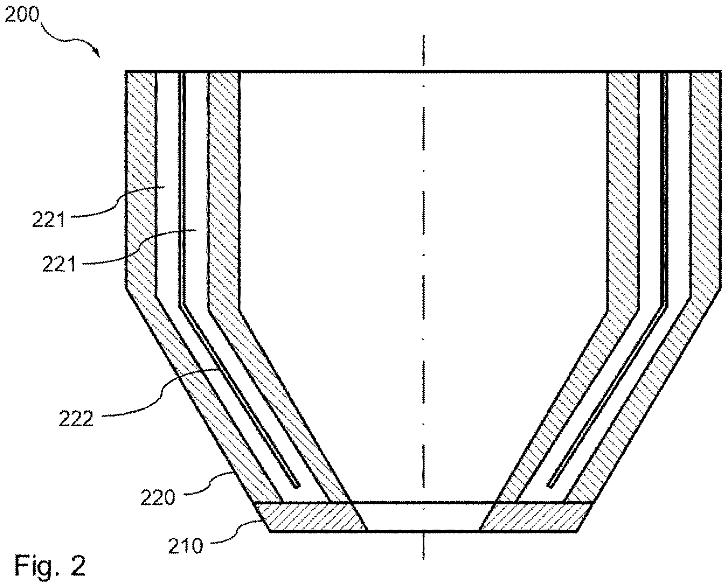

Further, the back-end part can comprise cooling channels, as shall be explained with reference to Fig. 2.

Fig. 2 also schematically shows an embodiment of the burner tip 200 manufactured according to an embodiment of the present invention in a sectional side view.

In accordance with the burner tip 100 of Fig. 1, the burner tip 200 shown in Fig. 2 comprises a front-end part 210 and a back-end part 220, wherein the entire front-end part 210 can be manufactured by means of non-additive or additive manufacturing and wherein the entire back-end part 220 is manufactured by means of additive manufacturing, particularly powder bed fusion (PBF).

The back-end part 220 is manufactured by means of the additive manufacturing process such that a wall of the back-end part 220 comprises an integrated cavity, recess, or structure 221, forming cooling channels for flowing a cooling fluid through the wall.

A cooling channel element 222, for example a parting sheet, can be provided in the cavity 221, such that the cavity 221 is divided into different cooling channels. This parting sheet 222 can also be manufactured by means of additive manufacturing and can then be inserted in the cavity 221.

The additive manufacturing process allows to easily and flexibly create complex cavities or structures 221 inside the wall of the back-end part 220 and parting sheets 222 for forming cooling channels, such that an optimum flow of cooling liquid, an optimum cooling, and an optimum heat dissipation can be achieved during burner operation. The invention therefore allows to manufacture an improved burner tip 200 with high cooling efficiency able to withstand high thermal loads during burner operation.

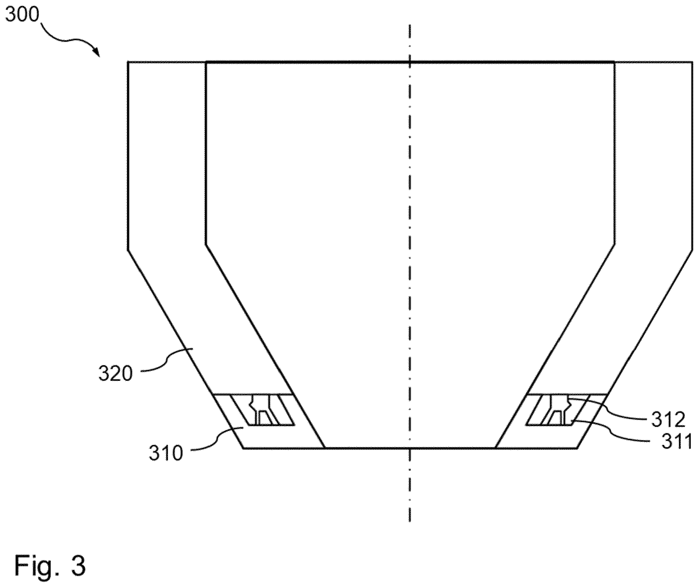

It is furthermore possible, that also the front-end part can comprise recesses, as shall be explained with reference to Fig. 3.

Fig. 3 also schematically shows an embodiment of the burner tip 300 manufactured according to an embodiment of the present invention in a sectional side view, wherein the burner tip 300 comprises a front-end part 310 and a back-end part 320.

The front-end part 310 is provided with a recess 311 in the surface facing the back-end part 320. An insertion element 312, for example a parting sheet, is provided inside this recess 311. This insertion element 312 is expediently manufactured by means of additive manufacturing, whereas the rest of the front-end part 310 can be manufactured by means of additive or non-additive manufacturing. The back-end part 320 can be manufactured by means of additive manufacturing directly on top of the front-end part 310.

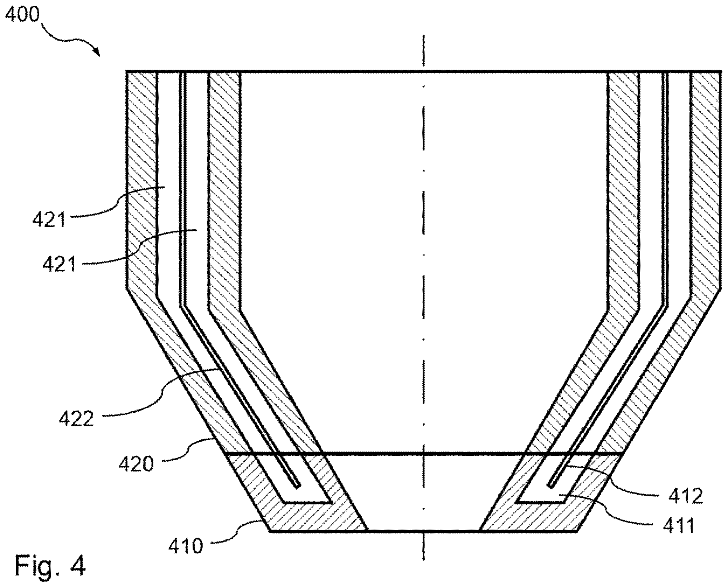

The additive manufacturing process allows to easily and flexibly create the insertion element 312 with complex structures. The recess 311 with the insertion element 312 is particularly configured to be brought in fluid communication with the cooling channels in the back-end part, as shall be explained with reference to Fig. 4.

Fig. 4 schematically shows an embodiment of the burner tip 400 with a front-end part 410 and a back-end part 420 manufactured according to an embodiment of the present invention in a sectional side view.

As shown in Fig. 4, a wall of the back-end part 420 comprises a cavity 421 forming cooling channels for flowing a cooling fluid through the wall. In accordance with the burner tip 200 shown in Fig. 2, the back-end part 420 shown in Fig. 4 is manufactured by means of additive manufacturing such that its wall comprises this integrated cavity 421. A channel element or parting sheet 422 is inserted into the cavity 421, wherein the parting sheet 422 can also be additively manufactured.

Further, in accordance with the burner tip 300 of Fig. 3, the front-end part 410 shown in Fig. 4 comprises a recess 411 with an insertion element 412. This recess 411 with the insertion element 412 is in fluid communication with the cavities 421 and thus with the cooling channels in the wall of the back-end part 420. The recess 411 especially forms a front end or front ending of the cooling channels.

The insertion element 412 is manufactured by means of additive manufacturing, whereas the rest of the front-end part 410 can be manufactured by means of additive or non-additive manufacturing. The back-end part 420 with the integrated cavities 421 can be additively manufactured directly on top of the front-end part 410. The insertion element 412 can be a part of the parting sheet 422 provided in the cavity 421 of the back-end part 420.

The additive manufacturing particularly allows to easily and flexibly create the both the parting sheet 412, 422 and the back-end part 420 with complex structures and aligned with each other in order to create optimum cooling channels for an optimum flow of cooling liquid, an optimum cooling, and an optimum heat dissipation.

The present invention therefore allows manufacturing of a hybrid burner tip using additive manufacturing for optimized cooling purpose at the rear-part or back-end of the burner tip and with a different material grade for high corrosion resistance at the front-end of the tip.

The present invention further allows to manufacture a burner tip with high cooling efficiency using optimised additive manufactures structures for optimised cooling channels with respect to flow- and heat transfer. Further, the invention allows a tailored use of the high-grade material, in particular the first material with high corrosion resistance and high metal dusting resistance, only in areas where specifically required at the very front of the burner tip. The second material for the back-end part can have less corrosion resistance and can therefore be less expensive.

## Claims

1. A method for manufacturing a burner tip (100, 200, 300, 400) for a burner, comprising the steps of:
manufacturing a front-end part (110, 210, 310, 410) of the burner tip (100, 200, 300, 400) of a first material; and
manufacturing a back-end part (120, 220, 320, 420) adjacent to the front-end part (110, 210, 310, 410) of a second material, wherein at least a part of the back-end part (120, 220, 320, 420) is manufactured by means of additive manufacturing.

2. The method according to claim 1, wherein the step of manufacturing the back-end part comprises:
manufacturing a wall of the back-end part (220, 420) comprising at least one cooling channel (221, 421) for flowing a cooling fluid through the wall.

3. The method according to claim 1 or 2, wherein the step of manufacturing the back-end part comprises:
manufacturing the entire back-end part (120, 220, 320, 420) by means of additive manufacturing.

4. The method according to claim 2 and 3, wherein the step of manufacturing the back-end part comprises:
manufacturing the wall of the back-end part (220, 420) by means of additive manufacturing with at least one integrated cavity (221, 421) forming the at least one cooling channel.

5. The method according to claim 2, wherein the step of manufacturing the back-end part comprises:
manufacturing the wall of the back-end part (220, 420) by means of non-additive manufacturing such that the wall comprises a cavity (221, 421);
manufacturing a cooling channel element (222, 422) of the back-end part (220, 420) by means of additive manufacturing; and
inserting the cooling channel element (222, 422) in the cavity (221, 421) such that the at least one cooling channel is created.

6. The method according to any one of the preceding claims, wherein the step of manufacturing the front-end part comprises:
providing a recess (311, 411) in a surface of the front-end part (310, 410) facing the back-end part (320, 420); and
providing an insertion element (312, 412) inside the recess (311, 411).

7. The method according to claim 6 when dependent upon claim 2, wherein the recess (411) with the insertion element (412) in the front-end part (410) is configured to be brought in fluid communication with the at least one cooling channel (421) in the wall of the back-end part (420).

8. The method according to claim 6 or 7, further comprising:
manufacturing the insertion element (312, 412) by means of additive manufacturing.

9. The method according to any one of the preceding claims, wherein the first material has a higher corrosion resistance than the second material.

10. The method according to any one of the preceding claims, wherein the first material comprises one or several of the following alloys:
alloy 699 XA;
alloy 602 CA;
alloy 690;
alloy 693.

11. The method according to any one of the preceding claims, wherein the second material comprises one or several of the following alloys:
625;
718;
stainless steel 316L.

12. A burner tip (100, 200, 300, 400) for a burner, manufactured according to a method of any one of the preceding claims.

13. A burner comprising a burner tip (100, 200, 300, 400) according to claim 12.
